# EUROPEAN PATENT APPLICATION

(11) **EP 1 508 535 A1**
(43) Date of publication of application: **23.02.2005**
(21) Application number: 04017861.8
(22) Date of filing: 28.07.2004
(51) Int. Cl.: B65F 1/10, B65F 1/14, B65F 1/16

(54) **Apparatus for sorted waste collection**

(30) Priority: 20.08.2003 IT VR20030104
(71) Applicant: Perlini, Bruno, 37047 San Bonifacio (Prov. of Verona) (IT)
(72) Inventor: Perlini, Bruno, 37047 San Bonifacio (Verona) (IT); Cipriani, Mario, 37069 Villafranca (Verona) (IT)
(74) Representative: Modiano, Guido, Dr.-Ing.

(57) **Abstract**

An apparatus for sorted waste collection, comprising, inside a pit (1), at least two containers (2a, 2b) that are designed to receive waste of a respective type, a closing cover (6) for the pit being also provided and having at least one waste insertion opening (7), the apparatus further comprising means for allocating the waste introduced through the insertion opening, such means being adapted to selectively arrange the introduced waste in the containers according to its type.

## Description

The present invention relates to an apparatus for sorted waste collection.

As is known, one of the most strongly felt environmental problems is constituted by the disposal of municipal solid waste.

In order to try to solve this problem, competent administrations have been adopting for some years a policy aimed at promoting waste recycling.

For this purpose, procedures for sorted waste collection have been started which directly involve the citizens, who are required to separate their waste by type and to collect it in appropriately provided collection sites, known as environmental islands or collection centers, where specific containers are installed, each of such containers being meant to receive a respective type of waste.

Environmental islands are known which are equipped with devices for sorted municipal waste collection and are composed of collection containers (generally one for each type of waste) arranged below the ground level. In particular, such containers (of the type traditionally used for waste) are accommodated in a pit that is formed in the ground and is closed upwardly by a flat cover arranged substantially at the level of the road surface. Each container is surmounted by a respective hopper for waste insertion, which rises from the cover that covers the pit and is usually characterized by a color that can be associated with the type of waste for the collection of which the underlying container is intended. In insertion hoppers, generally provided with a closure flap, the user introduces the waste bags, which fall into the underlying containers.

Furthermore, currently known apparatuses of this type are provided with devices that allow to recognize the user and to weigh the introduced waste, with the prospect of providing an incentive to sorted collection based on tax allowances granted to the user and linked to the weight of waste deposited by such user.

The aim of the present invention is to provide an apparatus for sorted waste collection that can make it more practical and convenient for users to deposit the waste.

Within this aim, an object of the present invention is to provide an apparatus for sorted waste collection that allows to reduce the impact of environmental islands on the street furniture of built-up areas.

Another object of the present invention is to provide an apparatus for sorted waste collection that thanks to its particular constructive characteristics is capable of giving the greatest assurances of reliability and safety in operation.

Another object is to provide an apparatus for sorted waste collection that has reduced dimensions.

This aim and these and other objects that will become better apparent hereinafter are achieved by an apparatus for sorted waste collection according to the invention, comprising, inside a pit, at least two containers that are designed to receive waste of a respective type, a closing cover for said pit being provided which has at least one waste insertion opening, characterized in that it comprises means for allocating the waste introduced through said at least one insertion opening, said allocation means being adapted to selectively arrange the introduced waste according to its type in said at least two containers.

Further characteristics and advantages of the invention will become better apparent from the description of some preferred but not exclusive embodiments of the apparatus according to the invention, illustrated by way of non-limiting example in the accompanying drawings, wherein:

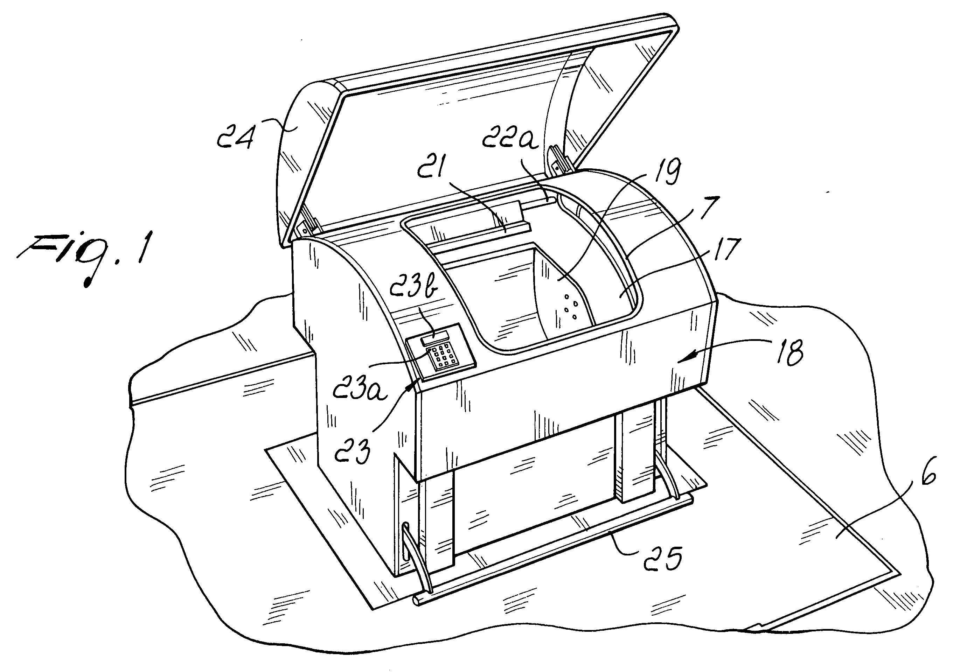

Figure 1 is a perspective view of a hopper provided on the apparatus according to the invention;
Figure 2 is a bottom view of the hopper of Figure 1, with parts omitted and elements shown in partial cross-section for the sake of greater clarity;
Figure 3 is a schematic view of an embodiment of routing means provided on the apparatus according to the invention in one of their possible operating positions;
Figure 4 is a schematic view of the routing means of Figure 3 in another operating position;
Figure 5 is a schematic view of the routing means of Figure 3 in another operating position;
Figure 6 is a sectional view, taken along a vertical plane, of the pit of the apparatus according to the invention, of the cover for closing the pit in the open position, and of a vehicle for transporting the containers that are present in said pit;

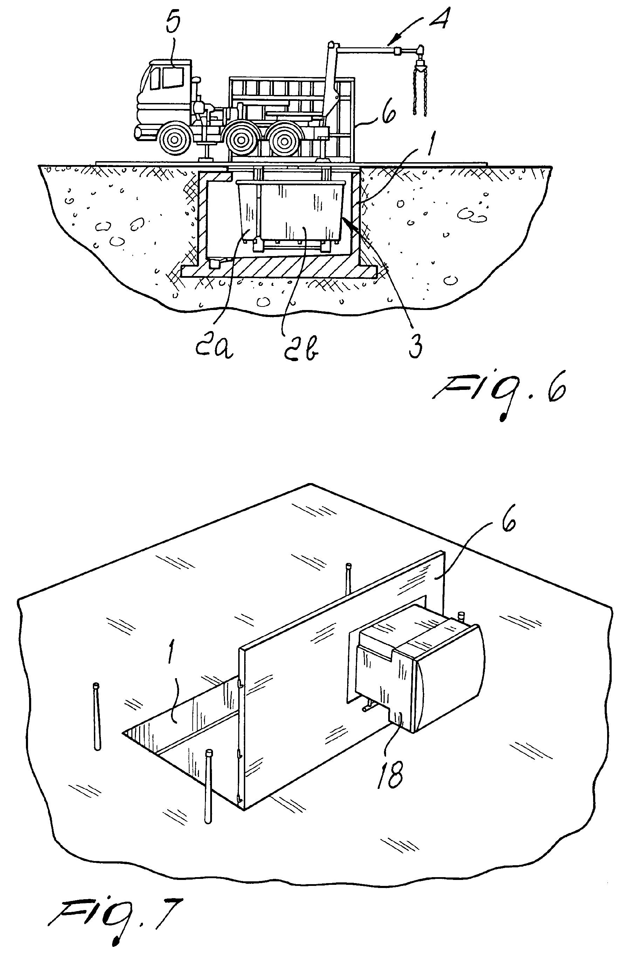

Figure 7 is a top perspective view of the hopper and of the cover for closing the pit in the open position;

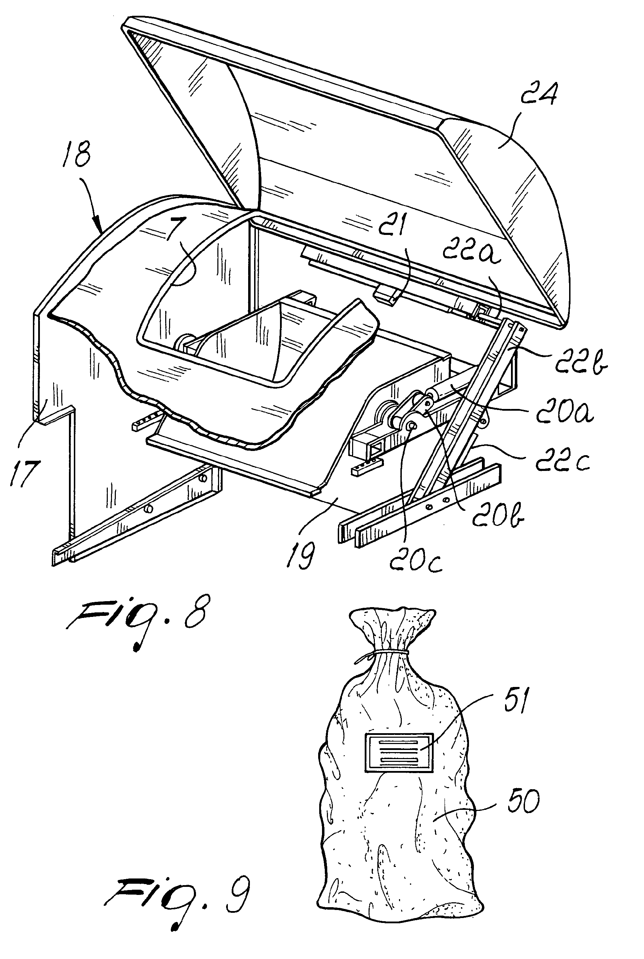

Figure 8 is a perspective view of the hopper of Figure 1, shown in partial cross-section in order to show its interior;
Figure 9 is a view of a waste bag with a label that bears a bar code.

In the exemplary embodiments that follow, individual characteristics, given in relation to specific examples, may actually be interchanged with other different characteristics that exist in other examples of embodiment.

Moreover, it is noted that anything found to be already known during the patenting process is understood not to be claimed and to be the subject of a disclaimer.

With reference to the figures, an apparatus for sorted waste collection according to the invention comprises, inside a pit 1, at least two containers that are conveniently open on the upper side. Each one of the containers is designed to receive waste of a respective type. For example, it is possible to provide within the pit 1 two containers, respectively a first container 2a for collecting so-called wet waste, and a second container 2b for collecting so-called dry waste. Advantageously, since the dry waste generally has a larger volume than the wet waste, the second container 2b has a higher capacity than the first container 2a. Preferably, the second container 2b has a containment capacity that is at least five times greater than that of the first container 2a.

In an exemplary embodiment shown in Figure 6, the first container 2a and the second container 2b are formed by two separate compartments, which are formed in a dump box 3 that can be moved, for its placement in the pit 1 and its extraction therefrom, by means of a mechanical arm 4 that is provided on an appropriately provided transport vehicle 5.

The pit 1 is covered upwardly by a closure cover 6, which in one example of embodiment may be covered by a paving of a type similar to road paving.

The cover 6 is conveniently pivoted to the upper edge of the pit 1 so that it can pass, for example by way of the action of actuation cylinders of the hydraulic type (not shown), from an open position, in which access to the pit from outside is allowed, to a closed position, in which the upper access opening of the pit 1 is closed.

At least one waste insertion opening 7 is formed on the cover 6 of the pit 1, and users can deposit waste through said opening. In the example shown in the figures there is a single waste insertion opening 7.

According to the invention, means for allocating the waste introduced through the insertion opening 7 are provided and are designed to arrange the introduced waste selectively in the containers according to its type.

Advantageously, the introduced waste allocation means comprise identification means, which are designed to identify the type of introduced waste, and routing means, which route the introduced waste subjected to the recognition process performed by the identification means toward the container provided for its collection according to its type.

Conveniently, management and control of the operation of the apparatus according to the invention is entrusted to program-based control means, which are functionally connected to the routing means and to the identification means and are constituted for example by a PLC device.

In greater detail, according to an exemplary embodiment of the invention, the routing means comprise at least one deflector panel, which acts substantially at an inlet 8 for introducing the waste in the pit 1. Said inlet 8 is connected to the insertion opening 7 and is arranged substantially above the containers provided in the pit 1 for waste collection.

Advantageously, it is possible to provide a single deflector panel, which can move on command in order to selectively divert the path of the falling waste through the inlet 8 toward the appropriate container, according to the type detected by the identification means. For example, the deflector panel can act between an inactive position, in which it substantially blocks the inlet 8, and a number of operating positions that corresponds to the number of containers in the pit 1 (which in turn is equal to the number of different types of waste). In each operating position, the deflector panel routes the waste toward a respective container, according to the type of said waste. With reference to the embodiment of the invention mentioned above, the deflector panel acts between said inactive position and two separate active positions: one in which it directs the fall of the dry waste toward the dry-waste container, and the other in which it directs the fall of the wet waste toward the wet-waste container.

The deflector panel may also assume a first position, in which it allows the waste of a first type to fall freely at a corresponding container designed for its collection and arranged in alignment below the inlet 8, and at least one second position, which is angularly inclined with respect to the first position and in which it diverts, again in accordance with the type of waste, the fall of said waste into a respective container, which is in a non-aligned position with respect to the inlet 8.

Advantageously, pusher means, formed by pusher elements such as for example hydraulic cylinders, can be advantageously associated with the deflector panel and act between the deflector panel and a support that is fixed to the cover 6, and therefore also act as actuators for the movement of the deflector panel. The pusher means apply to the waste that is introduced a thrust that is directed toward the bottom of the container for which they are intended, in order to obtain in practice a compaction of the waste in the container and prevent the waste from stacking up without filling it completely. The pusher means are therefore particularly useful in the discharge of dry waste, which as mentioned is commonly more bulky than wet waste.

In a currently preferred exemplary embodiment of the invention, shown in Figures 2 to 5, the routing means comprise a first deflector panel 9a and a second deflector panel 9b, which are respectively intended to divert the waste toward the first container 2a and toward the second container 2b.

In particular, the first deflector panel 9a is mounted so that it can rotate, by way of a rotation pivot 10, on a supporting frame 11 that is associated with the cover 6. A crank 12 acts on the rotation pivot 10 and is functionally connected to an actuation cylinder 13.

The first panel 9a is coupled so that it can oscillate to the second deflector panel 9b; more specifically, it is fixed to a first supporting framework 14a, which is connected so that it can rotate by means of an oscillation pivot 15 to a second supporting framework, which is fixed to the second deflector panel 9a.

Advantageously, the pusher means act between the first supporting framework 14a and the second supporting framework 14b and are constituted by a pusher element 16, which provides a pushing action in order to compact the dry waste intended for the second container 2b.

Conveniently, in order to ensure that the pusher 16 can effectively impart, by means of the second deflector panel 9b, said pushing action to the dry waste, during its descent toward the second container, the second deflector panel 9b is longer than the first deflector panel 9a.

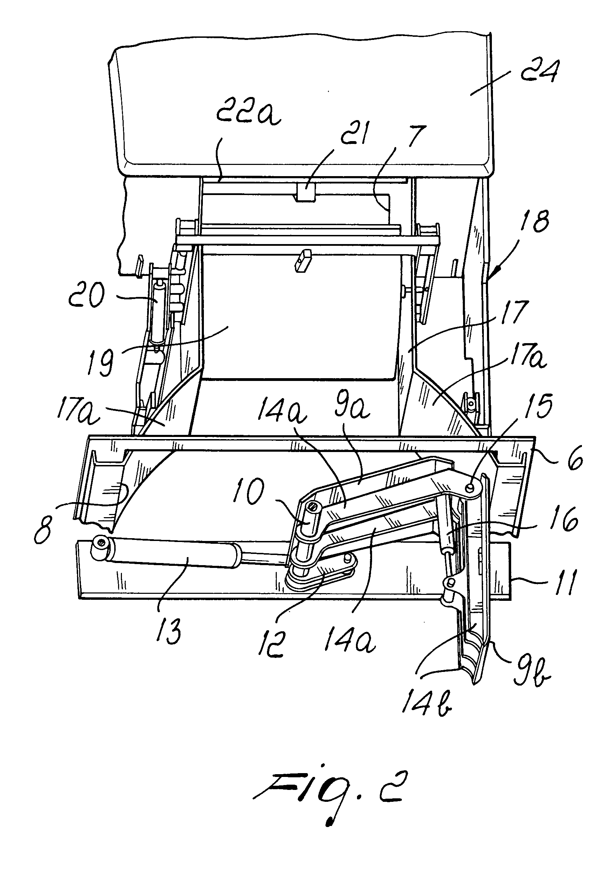

Merely by way of example, Figure 3 illustrates the position assumed by the first deflector panel 9a and by the second deflector panel 9b in order to allow the wet waste to fall into the second container 2a. In particular, it can be seen that the first deflector panel 9a and the second deflector panel 9b are arranged so as to be close to each other, the stem of the pusher 16 being in a retracted position.

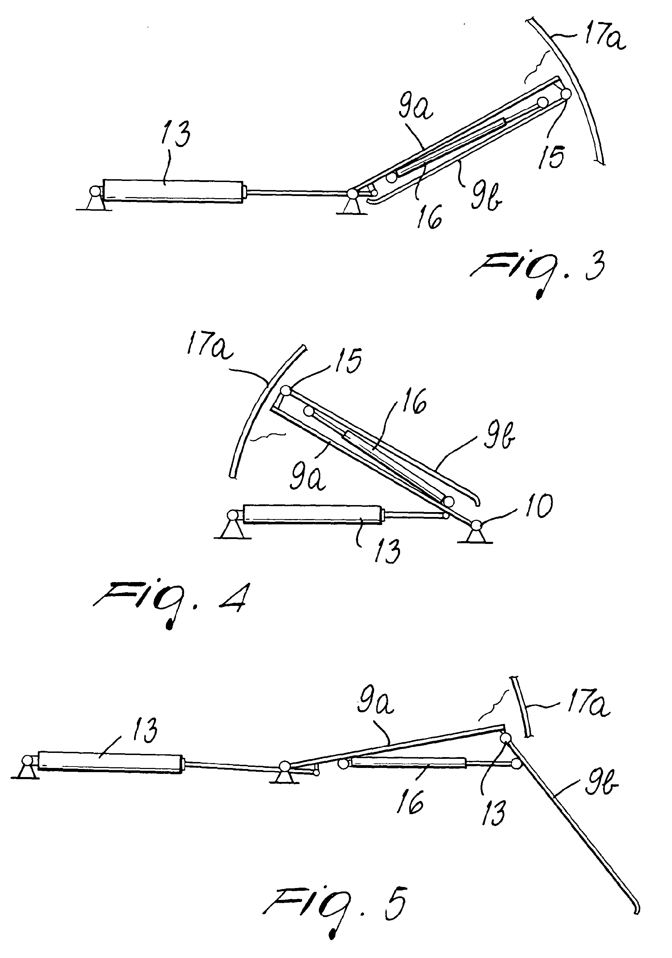

Figure 4 and Figure 5 illustrate, again by way of example, respectively the initial and final positions of the first deflector panel 9a and of the second deflector panel 9b if the dry waste is routed into the second container 2b.

In greater detail, the fall of the dry waste onto the second deflector panel 9b, arranged as in Figure 4, activates appropriately provided pressure sensors, which are associated with the second deflector panel 9b or with the pusher element 16 and in turn allow the activation, by the control means, of the actuation cylinder 13, which rotationally actuates about the rotation pivot 10 the first deflector panel 9a and also the second deflector panel 9b rigidly therewith, while the pusher element 16 remains at least initially with its stem in the retracted position.

During the rotary motion of the first deflector panel 9a and of the second deflector panel 9b about the rotation pivot 10, the dry waste slidingly engages the second deflector panel 9b. After a preset time, the pusher 16 is activated, causing a rotary motion of the second deflector panel 9b with respect to the first deflector panel 9a about the oscillation pivot 15, so as to apply to the dry waste an action that is meant to push it toward the bottom of the second container 2b.

Advantageously, the identification means mentioned above comprise a code that identifies the type of waste. In particular, a code that identifies the type of waste contained in a bag is associated with the traditional waste containment bag that is used by the user to collect the waste in his own home. This code can be applied directly to the bag or to an adhesive label meant to be applied by the user to the bag.

The waste type identification code can be for example a bar code, which is generated so that a specific code is assigned to each different type of waste. If the bar code is applied to adhesive labels, said labels can be for example given a different color depending on the type of waste coded by the bar code that said labels bear, in order to allow to distinguish them easily.

Figure 9 illustrates by way of example a bag 50 for collecting waste which is provided with a region 51 provided with a bar code.

The identification means further comprise reader means, which are capable of reading the identification code applied to the bag of waste and are functionally connected to the control means.

In particular, the reader means are accommodated in a waste receiving chamber 17, which is interposed between the insertion opening 7 and the inlet 8 and is formed for example inside a hopper 18, which conveniently protrudes at least partially from the cover 6 up to a level sufficient to allow convenient insertion of the waste by users in the insertion opening 7.

With reference in particular to Figure 2, it can be seen that the walls of the receiving chamber 17, substantially in the region affected by the action of the first and second deflector panels 9a and 9b, conveniently have a portion 17a that has an arc-like shape, so that the first and second deflector panels 9a and 9b skim, with their upper edge, the walls along a certain portion of their angular motion, during their rotary motion about the rotation pivot 10.

Advantageously, the waste receiving chamber 17 is provided with temporary retention means, which are designed to temporarily retain within the receiving chamber 17 the waste that has been introduced. Said temporary retention means are conveniently constituted by a cradle 19 for temporarily accommodating the introduced waste, which is mounted so that it can oscillate on the side walls of the receiving chamber 17 in order to pass from a retention position, in which it supports the introduced waste (in order to allow the reader means to perform the reading operations and allow waste weighing, as will become better apparent hereinafter), to a disengagement position, in which it allows said waste to fall toward the inlet 8.

In detail, the cradle 19 conveniently can be actuated rotationally by at least one actuator 20a, which acts on a lever 20b that rotates rigidly with a pivot 2c, which is in turn rigidly rotationally associated with the cradle 19.

The reader means can be constituted for example by an optical scanning device 21, which can move on command in order to read the identification code during the retention of the waste introduced in the receiving chamber 17 in engagement with the cradle 19.

The optical scanning device 21 is conveniently capable of performing a rotary scanning motion over the entire surface of the cradle 19 that is designed to accommodate the waste. In particular, the optical scanning device 21 is associated with a bar 22, which is arranged transversely to the receiving chamber 17 and is arranged above the cradle 19.

At at least one of its ends, the bar 22a is connected to an arm, which is pivoted to the side wall of the receiving chamber 17 and can be actuated with a rotary motion by a linear actuator 22c.

According to a different embodiment, the identification means comprise optical sensor means that are capable of detecting the color of the waste containment bag. It is in fact possible to provide, as is in any case customary, that the waste is collected by the user in his own home in separate bags, each of a different color, depending on the type of waste. Thus, for example, dry waste is generally collected in green bags, while wet waste is collected in black bags. The optical reader means also can be conveniently accommodated in the waste receiving chamber 17.

In one exemplary embodiment of the invention, there are also means for correlating the introduced waste with the corresponding user that has introduced it, said means allowing the competent authorities to easily identify the user who is responsible for example for depositing waste for which insertion in the apparatus according to the invention is forbidden and consequently to create a system of sanctions for this kind of violation.

Said means for correlating the introduced waste with the corresponding introducing user comprise a code that identifies the introducing user and is associated with the waste containment bag.

For example, said code that identifies the introducing user can be a bar code.

For example, in the same bar code that codes the type of waste contained in the bag it is also possible to code the personal data of the user. The competent authority will provide individual users with bar codes in which their personal data are coded together with the different types of waste to be discharged into the apparatus according to the invention. If a bag that contains waste that does not comply with the type indicated on the bar code or is not compatible with sorted collection is found in the containers, the competent authorities, by way of the correlation means, can trace the introducing user and apply the appropriate sanctions.

Advantageously, the correlation means can further comprise printer means, for example of the inkjet type, which are accommodated within the receiving chamber. Said printer means are designed to print on the bag introduced by the user his identification code. Conveniently, the printer means intervene during the retention of the bag in the cradle. One example of particularly suitable printer means is constituted by the printers marketed by the German company Wiedenbach, but other similar models may also be used.

Conveniently, weighing means are associated with the cradle 19 for temporarily accommodating the waste; said means are functionally connected to the control means and allow to weigh the waste introduced by the user.

Advantageously, the apparatus according to the invention is provided with user interface means, which are functionally connected to the control means and are formed on the control panel 23 that can be accessed by the user and is conveniently arranged on the hopper 18.

The user interface means comprise user recognition means constituted for example by a reader for cards or personal identification cards, such as for example cards provided with a magnetic strip or a chip, which store a user recognition code, coded by the municipal authority or by another competent authority. The user interface means further comprise keypad means 23a for entering instructions, means for displaying messages constituted by a display, and optionally acoustic and/or visual indicators, constituted for example by warning lights or buzzers.

Conveniently, the user interface means comprise means, for example of the acoustic and/or visual type, for signaling complete filling of the containers; such means are controlled by the signal that arrives from level sensing means capable of detecting the level of filling of each container. For example, the level sensing means can be constituted by optical photocell-based sensors, which are arranged for example at the upper rim of the containers so that they are activated when the container with which they are associated is completely full, or can be constituted by pressure sensing means that are associated with the deflector panel and more particularly with the second deflector panel 9b or with the pusher means. Said pressure sensing means detect the passing of a preset pressure threshold value that is determined by the resistance provided against the discharge of further waste by the waste already accumulated in a container when it is completely full. With reference to the example of embodiment of Figures 2 and 5, the pressure sensing means are more specifically capable of detecting the passing of a preset pressure threshold value determined by the resistance provided by the waste already accumulated in the second container 2b, once it has been filled completely, against the rotary motion (actuated by the pusher 16) of the second deflector panel 9a about the oscillation pivot 15 and with respect to the first deflector panel 9a.

Advantageously, the control means are functionally connected to data transmission means, constituted for example by a modem which is connected over a network to a central management unit, which in turn is conveniently connected to other apparatuses according to the invention distributed on the territory. Each apparatus according to the invention, connected to the central control unit, can be conveniently identified by means of identification data, such as for example a number and/or an alphanumeric code.

The central management unit, constituted for example by a computer installed at the headquarters of a municipal administration or other competent authority, receives from the control means all the information related to the discharge of waste into the apparatus according to the invention, allowing centralized management of sorted waste collection in a given territory and the starting of a tax allowance system by knowing the quantity and type of waste that is discharged. Centralized management, moreover, has the advantage of allowing immediate interventions if one of the containers is completely full or in case of abnormal operation.

The apparatus according to the invention conveniently uses means for dispensing an anti-fermentation product in at least one of the containers. The anti-fermentation product allows to slow the fermentation process in particular of the wet waste and the consequent onset of bad odors. Moreover, it is possible to provide means for automatic cleaning of the containers which allow their disinfection after emptying.

Conveniently, a door 24 is associated with the insertion opening 7, can be actuated for example by means of a pedal 25, and is controlled by locking means, not shown, which are controlled by the control means and more specifically by the recognition of the user on the part of the recognition means. Moreover, a closure detector (also not shown), adapted to detect the closure of the door 24, can be associated with the door 24. Said closure detector can be constituted for example by a magnetic switch and is functionally connected to the control means, in order to control, following the closure of the door 24, the automatic startup of the scanning motion on the part of the optical scanning device 21.

Advantageously, a pump (not shown) for discharging wastewater from the pit is also provided.

Moreover, it should be noted that the actuation of the hydraulic cylinders provided in the apparatus according to the invention is conveniently performed by means of a hydraulic pump.

The operation of the apparatus according to the invention is as follows.

The user, in his own home, sorts the waste, for example dry and wet waste, collecting it in separate bags, which are optionally colored differently from one another and are provided with a specific bar code that codes the type of waste that they are meant to contain. The bar code is applied by the user, by means of the adhesive label, so that it is arranged substantially at the center of the bag.

In order to start the waste discharge operations, the user is required to submit his personal card to reading on the part of the recognition means or to enter a personal code on the keypad means 23a.

Following recognition, performed by the control means or by the central management unit, a message such as "User authorized" appears on the display and the means for locking the door 24 that closes the insertion opening 7 are deactivated. If the user is not recognized, a message such as "User not recognized" appears on the display.

The user opens the door 24 by means of the pedal 25 and inserts, through the insertion opening 7, a single bag into the hopper, resting it on the temporary accommodation cradle 19, which is arranged in the retention position. The user takes care to place the bag on the cradle 19 so that the bar code faces upwardly.

After positioning the bag, the user closes the door 24 again. When the door 24 is closed, the closure detector authorizes the start of the scanning motion of the optical scanning device 21 in order to read the bar code placed on the bag. Once reading has been performed, the optical scanning device 21 generates a signal that represents the bar code placed on the bag. The signal in output from the optical scanning device 21 is made available in input to the control means, which identify the contents of the bag by decoding the signal received from the optical scanning device and comparing it with preinstalled codes. If provided, the printer means intervene to apply the user identification code to the bag.

Once the type of waste has been identified, the weighing means weigh the bag and send their signal to the control means. The control means then record in an appropriate memory area the weight of the bag, the date and time when the bag was discharged, the type of waste contained in the bag, and the code of the user who performed the discharge. The control means, after performing these operations, actuate the positioning of the routing means (for example, by means of the actuation cylinder 13 and the pusher element 16, they actuate the movement of the first and second deflector panels 9a and 9b), so that the bag is transferred into the appropriate container and then actuate the rotary motion of the cradle 19 in order to unload the bag and let it fall toward the routing means.

If the bag is poorly positioned on the cradle 19, so that its dimensions interfere with the scanning motion of the optical scanning device 21, the reading operations are interrupted, returning the optical scanning device 21 to the initial position. Then the acoustic and visual indicators are activated and so is the display, which displays a message such as "Reposition the bag", and the means for locking the door 24 are released in order to allow the user to position the bag more appropriately.

If the bag does not have the bar code or is not positioned so that the bar code is directed upwardly and can therefore be read correctly by the optical scanning device 21, the optical scanning device 21, being unable to perform reading, generates a signal that interrupts the discharge operations. The control means therefore do not record the data of the discharge operation and do no activate the routing means or the cradle to transfer the bag into the appropriately provided container. The display is activated to display messages such as "Unauthorized bag", "Reposition the bar code on the bag", "Remove the bag", the acoustic and visual indicators are activated, and the means for locking the door are released in order to allow to remove the bag. Moreover, by means of the data transmission means, the control means report to the central management unit that the collection operation required by the user could not be completed.

At the end of the operations for discharging the bag into the appropriately provided container, the cradle and the deflector panel return to their initial position, and the apparatus according to the invention prepares itself to receive another bag to be discharged.

When one of the containers is full, the pressure sensing means transmit a "container full" signal to the control means, which accordingly activate the acoustic and visual indicators, activate the display in order to display messages such as "Containers full", "Unauthorized bag discharge", and send to the central management unit, by way of the data transmission means, the full-container signal, the data that identify the apparatus according to the invention and its geographic location, in order to activate the emptying procedures.

All the characteristics of the invention described above as advantageous, convenient or the like may also be omitted or be replaced with equivalents.

The invention thus conceived is susceptible of numerous modifications and variations, all of which are within the scope of the appended claims.

In practice, it has been observed that the invention has achieved the intended aim and objects in all of its embodiments.

In practice, the materials used, as well as the shapes and dimensions, may be any according to requirements.

All the details may further be replaced with other technically equivalent elements.

The disclosures in Italian Patent Application no. VR2003A000104, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for sorted waste collection comprising, inside a pit, at least two containers that are designed to receive waste of a respective type, a closing cover for said pit being provided which has at least one waste insertion opening, **characterized in that** it comprises means for allocating the waste introduced through said at least one insertion opening, said allocation means being adapted to selectively arrange the introduced waste according to its type in said at least two containers.

2. The apparatus according to claim 1, **characterized in that** said means for allocating the introduced waste comprise means for identifying the type of introduced waste and routing means adapted to direct the introduced waste toward one of said at least two containers, according to the type detected by said identification means.

3. The apparatus according to claim 2, **characterized in that** it comprises program-based control means that are adapted to manage said apparatus and are functionally connected to said routing means and to said identification means.

4. The apparatus according to one or more of the preceding claims, **characterized in that** said routing means comprise at least one deflector panel, which acts substantially at an inlet for introducing the waste in said pit, said inlet being connected to said at least one insertion opening and being arranged substantially above said containers, said at least one deflector panel being movable on command in order to selectively deflect the path of the falling waste through said inlet toward one of said at least two containers, selected according to the type detected by said identification means.

5. The apparatus according to one or more of the preceding claims, **characterized in that** said routing means comprise pusher means, which are associated with said at least one deflector panel and are adapted to apply to the introduced waste a pushing action that is substantially directed toward the bottom of said one of said at least two containers that is selected according to the type detected by said identification means.

6. The apparatus according to one or more of the preceding claims, **characterized in that** said routing means comprise a first deflector panel and a second deflector panel, each of which is designed to deflect the waste toward a respective container, said first deflector panel being movable by rotating with respect to said inlet, said second deflector panel being coupled to said first deflector panel so that it can oscillate, said pusher means acting between said first deflector panel and said second deflector panel.

7. The apparatus according to one or more of the preceding claims, **characterized in that** said identification means comprise a code for identifying the type of waste, which is associated with the waste containment bag, and means for reading said code which are functionally connected to said control means.

8. The apparatus according to one or more of the preceding claims, **characterized in that** said identification means comprise optical sensing means that detect the color of the waste containment bag, containment bags of a different color for each type of waste being provided.

9. The apparatus according to one or more of the preceding claims, **characterized in that** it comprises means for correlating the introduced waste with the corresponding user who introduced it.

10. The apparatus according to one or more of the preceding claims, **characterized in that** said correlation means comprise a code that identifies the introducing user, said identification code being associated with the waste containment bag.

11. The apparatus according to one or more of the preceding claims, **characterized in that** a waste receiving chamber is interposed between said at least one insertion opening and said inlet and protrudes at least partially from said cover, said chamber accommodating said reader means and being provided with means for temporarily retaining in said chamber the introduced waste.

12. The apparatus according to one or more of the preceding claims, **characterized in that** said temporary retention means comprise a cradle for temporarily accommodating the introduced waste, which is mounted so that it can oscillate with respect to the side walls of said chamber in order to pass from a retention position, in which it supports the introduced waste, to a disengagement position, in which it allows the introduced waste to fall toward said inlet.

13. The apparatus according to one or more of the preceding claims, **characterized in that** said reader means comprise an optical scanning device, which can move on command in order to read said code.

14. The apparatus according to one or more of the preceding claims, **characterized in that** it comprises means for weighing the introduced waste which are functionally connected to said control means and are associated with said temporary accommodation cradle.

15. The apparatus according to one or more of the preceding claims, **characterized in that** said correlation means comprise printer means, which are accommodated in said waste receiving chamber and are functionally connected to said control means, in order to apply said code that identifies the introducing user to the waste containment bag.

16. The apparatus according to one or more of the preceding claims, **characterized in that** it comprises user interface means, which are functionally connected to said control means and comprise user recognition means.

17. The apparatus according to one or more of the preceding claims, **characterized in that** said user interface means comprise keypad means and message display means.

18. The apparatus according to one or more of the preceding claims, **characterized in that** said user interface means comprise acoustic and/or visual means for indicating the complete filling of said containers, pressure sensing means being provided which are associated with said deflector panel, said means being functionally connected to said control means and being adapted to detect the complete filling of said containers.

19. The apparatus according to one or more of the preceding claims, **characterized in that** said control means are functionally connected to means for transmitting data to a central waste collection management unit.

20. The apparatus according to one or more of the preceding claims, **characterized in that** it comprises means for dispensing an anti-fermentation product in at least one of said at least two containers.

21. The apparatus according to one or more of the preceding claims, **characterized in that** it comprises a pump for discharging the wastewater from said pit.

22. The apparatus according to one or more of the preceding claims, **characterized in that** it comprises a door that is associated with said at least one insertion opening and is provided with locking means that are functionally connected to said control means.

23. The apparatus according to one or more of the preceding claims, **characterized in that** it comprises a sensor for detecting the closure of said door, which is functionally connected to said control means in order to actuate, following the closure of said door, the automatic starting of the scanning motion of said optical scanning device.

24. The apparatus according to one or more of the preceding claims, **characterized in that** it comprises, inside said pit, two containers, respectively a first container for collecting the dry waste and a second container for collecting the wet waste.

25. The apparatus according to one or more of the preceding claims, **characterized in that** said first container has a higher capacity than said second container.
